# EUROPÄISCHE PATENTANMELDUNG

(11) **EP 4 636 519 A1**
(43) Veröffentlichungstag der Anmeldung: **22.10.2025**
(21) Anmeldenummer: 24170575.5
(22) Anmeldetag: 16.04.2024
(51) Int. Cl.: G05B 23/02

(54) **COMPUTERIMPLEMENTIERTES VERFAHREN, COMPUTERPROGRAMMPRODUKT UND SYSTEM ZUM ERKENNEN VON UNREGELMÄSSIGKEITEN IN EINER INDUSTRIELLEN ANLAGE**

(71) Anmelder: Siemens Aktiengesellschaft, 80333 München (DE)
(72) Erfinder: Esslinger, Gabriel, 76275 Ettlingen (DE); Maatouki, Ahmad, 76149 Karlsruhe (DE); Paskaran, Dinesh, 76332 Bad Herrenalb (DE); Ripplinger, Thomas, 76149 Karlsruhe (DE)
(74) Vertreter: Siemens Patent Attorneys

(57) **Zusammenfassung**

Die Erfindung betrifft Mustererkennung wie z.B. Anomalie-Erkennung durch Analyse Tools und Lösungsfindung durch Anlagendokumentation und Weiterverarbeitung in LLM und weiterer Künstlicher Intelligenz.

Die beschriebene Lösung verknüpft die verschiedenen, komplexen Teilbereiche, insbesondere auch Handbücher, Ergebnisse aus Suchmaschinen und weitere Daten, sowie vorverarbeitete und gefilterte Daten mit Hilfe von künstlicher Intelligenz und sorgt somit für eine Datendemokratisierung.

## Beschreibung

Die Erfindung betrifft Mustererkennung wie z.B. Anomalie-Erkennung durch Analyse Tools und Lösungsfindung durch Anlagendokumentation und Weiterverarbeitung in LLM und weiterer Künstlicher Intelligenz.

In der Industrie werden teilweise sehr komplexe Anlagen verwendet beispielsweise für die Produktion und Fertigung von Gütern. Diese Anlagen bestehen dabei aus vielen verschiedenen Assets wie Bearbeitungsmaschinen und Transportvorrichtungen (beispielsweise zwischen den Bearbeitungsmaschinen), Vorrichtung für Verpackungen usw. Die verwendeten Assets können dabei auch von unterschiedlichen Herstellern kommen, was zu unterschiedlichen Bedienungen, Schnittstellen, Verhalten und Kennlinien von charakteristischen Werten der Assets (beispielsweise Stromverbrauch, Geräuschentwicklung, Vibration) führen kann. Das Einrichten und Betreiben einer solchen Anlage ist ebenfalls komplex, da die unterschiedlichen Aspekte der Anlage, wie Verkabelungen, Kommunikationsschnittstellen, oder die Steuerung der Bearbeitungsmaschinen sowie des reibungslosen Produktionsablaufs auch sehr verschiedene Software-Tools benötigen. Verschärft durch Zeit- und Kostendruck sowie auch durch Fachkräftemangel kann das Wartungspersonal einer Anlage unmöglich alle auftretenden Probleme erkennen, einordnen und in adäquater Zeit bearbeiten oder lösen. Selten auftretende Alarme oder untypische Signalverläufe sind ebenfalls schwer zu erkennen.

Bislang war es in der Regel so, dass oben beschriebene Probleme, die aus untypischen Zuständen hervorgingen, häufig nicht erkannt wurden. Dadurch können unerwünschte Kosten durch Folgeschäden entstehen, beispielsweise wenn das Bearbeitungswerkzeug einer Bearbeitungsmaschine ausgewechselt werden müsste und durch eine stumpfe Fräse nicht nur ein erhöhter Strombedarf bei der Bearbeitung entstehen kann, sondern auch das zu-bearbeitende Werkstück einer Qualitätskontrolle ggf. nicht standhält (weil beispielsweise die Kanten nicht korrekt ausgefräst sind) und als Ausschuss aussortiert werden müssen. Das führt zu Verlusten in der Produktion und auch zu ungeplanten Ausfallzeiten, die entstehen, wenn das Bearbeitungswerkzeug ausgewechselt werden muss.

Im besseren Fall wird zwar erkannt, dass ein Problem vorliegt, die Zusammenhänge können durch die Komplexität aber ggf. nicht oder nicht richtig erkannt werden. Das kann in der Regel nur durch Hinzuziehen von weiteren Experten gelöst werden, was wiederum zeit- und kostenintensiv ist.

Es sind bereits Lösungen für Teilbereiche bekannt. In der US 11,372,650 B wird ein System zur Behandlung von Ausnahmen zwischen einem System und einem Nutzer beschrieben. Automatisierte Geschäftsprozesse (beispielsweise einer Versicherung) werden auf Ausnahmen überprüft, und dann aus einer Datenbank passende Ereignisse herausgesucht, welche bei einer vorherigen Durchführung des gleichen Geschäftsprozesses aufgetreten sind. In einem nächsten Schritt wird ein Dialog mit einem Nutzer (auf einem weiteren Gerät) durchgeführt, welches zumindest eine Lösung zu der Ausnahme anbietet und die ausgewählte Lösung dann ausführt. Dabei wird jedoch auch immer wieder ein Experte zur Bewertung und Wartung erforderlich sein.

Es ist Aufgabe der Erfindung, eine Lösung anzugeben für das oben beschriebene Problem, welches eine einfache Problemerkennung in einem komplexen Umfeld, insbesondere in einer Anlage der beschriebenen Art, ermöglicht. Es ist weiterhin Aufgabe der Erfindung, ein Software-Werkzeug anzugeben, welches eine Unterstützung beim Auffinden von Anomalien anbietet und gegebenenfalls auch Lösungsvorschläge unterbreitet.

Die Aufgabe wird gelöst durch ein computerimplementiertes Verfahren gemäß den Merkmalen des unabhängigen Patentanspruchs 1 und ein Computerprogrammprodukt gemäß den Merkmalen des Patentanspruchs 10.

Die Aufgabe wird weiterhin gelöst durch ein System gemäß den Merkmalen des Patentanspruchs 11.

Weitere Ausgestaltungen der Erfindung sind durch die Unteransprüche angegeben.

Das beschriebene Ausführungsbeispiel ist nicht den Schutzbereich einschränkend zu verstehen.

Die beschriebene Lösung verknüpft die verschiedenen, komplexen Teilbereiche mit Hilfe von künstlicher Intelligenz und sorgt somit für eine Datendemokratisierung. Die Daten können somit auch für technisch nicht versierte Benutzer einfacher zugänglich gemacht werden. Abgeleitete Lösungen (z.B. Verknüpfung: ungünstige Vibration - Bauelement identifiziert - Handbuch - Lösung) können dem Nutzer direkt vorgeschlagen werden.

Zum Verfahren:
- Der Benutzer oder auch ein Analyseprogramm wählt beispielsweise Daten für einen bestimmten Zeitbereich aus - bestimmte Maschinen oder Anlagenteile, ein bestimmter Zeitbereich der ein aktuelles Problem betrifft, es kann aber auch ein Vergleich mit einem früheren Verhalten der Anlage verglichen werden
- Die Daten werden im Hintergrund an die Analysetools übergeben
- Abhängig von den Datenquellen (beispielsiwese ausgewählte Events, z. B. der Zusammenhang zwischen Daten und Alarmen, Kennwerte, OEE Overall Equipment Effectiveness - KPI, reason codes), werden dem Benutzer Fragestellungen vorgeschlagen -
- Der Nutzer kann über das Chat-Interface Fragen zu den Daten stellen.
- Die Fragen werden im Backend mit den Antworten der Analysetools, der Anlagendokumentation und LLM verknüpft.
- Bei Bedarf erfolgt eine Vorverarbeitung der Daten (z.B. Berechnung einer statistischen Analyse) je nach Benutzer-Anfrage, und die Weiterverwendung dieser situationsabhängig vorverarbeiteten Daten für die Folge-Schritte im Analyseprozess
- Als Antwort erhält der Nutzer eine Erklärung seiner Daten und evtl. Problemstellungen sowie konkrete Lösungsvorschläge
- Anwendung eines mehrschrittigen Verfahrens, bei dem auf Basis der gemachten Benutzereingaben und der vorliegenden Daten weitere relevante Fragen gestellt werden, um das Problem genauer einzugrenzen und dann eine Antwort bzw. Empfehlung zu ermitteln.

Eine Besonderheit der vorliegenden Erfindung ist, dass die Auswahl der berücksichtigten Daten auf Basis der ersten Analyseschritte ggf. erweitert (durch Hinzuziehen von weiteren, ursprünglich nicht berücksichtigen Daten, insbesondere Handbücher, Wartungshistorien oder auch zusätzlicher Sensordaten) oder reduziert (durch Nachverarbeitung der vorhandenen Daten wie z.B. Zusammenfassung, Aggregation, filtern nach relevanten Informationen) wird. Somit kann im Vergleich zu bekannten Verfahren eine umfassendere Analyse der Anzeigen erfolgen, die dem Bedienpersonal die Einschätzung vorhandener Meldungen abnehmen kann und möglicherweise auch Handlungsempfehlungen erzeugen kann, welche zur Beseitigung der Anomalie führen können, sofern erforderlich.

Hierbei werden insbesondere als Eingangsinformation Empfehlungen verwendet, die in vorherigen Analysen gegeben und vom Anwender als zutreffend oder nicht-zutreffend bewertet wurden.

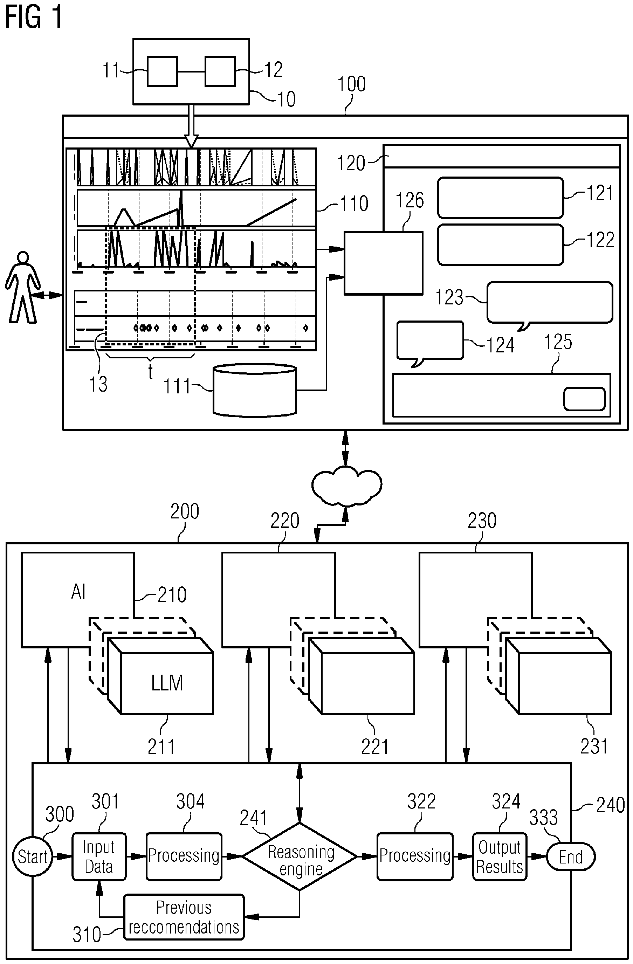

Die Erfindung wird in einem Ausführungsbeispiel dargestellt. Dabei zeigt
- Figur 1: eine Übersicht über die Architektur und das System, und
- Figur 2: ein mögliches Ablaufdiagramm, insbesondere am Beispiel einer Flaschenabfüllanlage.

Die Anwendung 100 besteht aus drei Hauptkomponenten:
- Diagramm 110, das zur Analyse verwendet wird,
- Chat-Komponente 120, für interaktive Dialoge basierend auf dem ausgewählten Datenkontext
- Backend (200), für die Aufbereitung von Antworten auf Basis verschiedener Tools

Das Diagramm 110 wird zur visuellen Darstellung von in der Anlage 10, beispielsweise durch Sensoren 11 an den vorhandenen Assets 12, ermittelten Daten verwendet. Hierbei sind beispielsweise ganz unten Alarme dargestellt - üblicherweise in einer auffälligen Farbe. Diese Alarme können auch noch mit weiterem, erläuternden Text hinterlegt sein. Oben sind verschiedene Kurven zu sehen, welche beispielsweise Temperatur, Strom, oder Vibration in einem Verlauf über die Zeit anzeigen. So kann beispielsweise bei einer Fräse mit der Zeit durch Abnutzung der Stromverbrauch im Betrieb steigen, die Vibration ebenfalls und auch die Temperatur. Dadurch kann üblicherweise erkannt werden, wann der Fräskopf nicht mehr verwendet werden sollte und ausgewechselt werden muss. Dies ist aber nicht nur abhängig von der Art des bearbeiteten Materials, sondern auch beispielsweise herstellerabhängig von Art und Material der Fräse selbst, oder auch von der Geschwindigkeit, mit der die Fräse betrieben wird.

Nur gut geschultes Bedienpersonal wird ohne weiteres erkennen, wie die Alarme zu lesen und die Anzeige zu interpretieren ist, also ob ein Handlungsbedarf in der Anlage existiert.

Es werden die Daten 13 ausgewählt, die für eine weitere Auswertung vorgesehen sind und die als Kontext für die Chat-Komponente verwendet werden.

Sonstige Datenquellen 111 bestehen beispielsweise aus alten gesammelten Daten aus den Assets 11, 12 / Maschinen und Maschinenteilen und Fertigungshandbüchern, bekannten Mustern, einer Wartungshistorie der Anlage oder der Assets, insbesondere auch bereits zuvor durchgeführter Bewertungen ähnlicher Natur, und der dabei erzeugten Handlungsempfehlungen inklusive einer Bewertung, ob diese Handlungsempfehlungen auch den gewünschten Erfolg gezeigt, also die ermittelte Anomalie (sofern vorhanden) beseitigt haben.

Eine Chat Komponente 120 ermöglicht es, Fragen 122 in Abhängigkeit vom aktuellen Kontext und der Datenerhebung zu stellen und bei Bedarf eine Interaktion eines Benutzers mit dem erfindungsgemäßen System, auch Backend-Dienst genannt, 200 zu ermöglichen.

Die Daten aus der Anwendung oder Anlage werden gesammelt an den Backend-Dienst gesendet. Dieser kann sich in einer Ausführungsform in der Cloud befinden.

Das hat den Vorteil, dass in der Regel ein hoher Rechenbedarf für die im System befindlichen LLM benötigt wird. Über einen Remote-Zugriff kann das erfindungsgemäße System auch mehreren, ähnlichen Anlagen an verschiedenen Standorten zur Verfügung gestellt werden.

Die Metainformationen des Diagramms (Zeitbereich, Variablen, Asset, Darstellungsform) werden gemeinsam mit den Fragen (beispielsweise des Benutzers oder einer Anwendung) an den Backend-Dienst übergeben.

Der Backend-Dienst sammelt anhand dieser Daten zusätzliche Informationen von den angeschlossenen Systemen.

Die Anwendung (100) erkennt Änderungen und informiert den Benutzer über 121, dass der Daten Kontext sich geändert hat.

Je nach erkanntem Kontext kann das System mehrere Prompts vorschlagen 122 mittels welcher die KI dann im Weiteren eine Lösung für die Behebung der Anomalie finden soll.

Es können solche Prompts verwendet werden, es gibt aber auch die Möglichkeit für den Benutzer, diese oder eigene Prompts an das System zu übermitteln.

Ein Ablauf dieses Frage-und Antwort-Spiels ist in 240 dargestellt. Die Eingabe-Daten "Input Data" 301 werden vorverarbeitet, (Pre-Processing) 304, und mit weiteren Dateninhalten angereichert. Dies können mehrere parallele Vorverarbeitungen sein. Wie z.B. eine Vibrationsanalyse der Daten oder ein Blick ins Wartungshandbuch der Maschine.

Dann wird entschieden, ob die Informationen bereits ausreichend sind, oder ob weitere Eingaben notwendig sind, und wenn ja, welche. Sobald ein ausreichend gutes Ergebnis vorliegt, wird dies verarbeitet 322 und ausgegeben. 324. Unter Verarbeitung kann man sich beispielsweise vorstellen, dass die Anomalie in der Anlage identifiziert wurde - beispielsweise gibt es eine Verzögerung an der Verschlussanlage, weil der Nachschub an Verschlusskapseln nicht schnell genug geliefert wird. Im Vergleich zu 304, werden hier die relevanten Pre-Processing-Ergebnisse verarbeitet. Z.B. die Vibrationsanalyse war unauffällig und wird deshalb nicht berücksichtigt. Der Blick ins Wartungshandbuch war auffällig - diese Information wird dann weiterverarbeitet.

Dann könnte die Verarbeitung eine Ausgabe erzeugen, die darauf hinwirkt, dass mehr Nachschub in kürzerer Zeit erfolgt und daher hier keine Verzögerung mehr auftritt (welche eine Rückwirkung auf den ganzen Verarbeitungsprozess in der Anlage hätte).

Außerdem wird die Empfehlung abgespeichert und für spätere Abfragen zur Verfügung gestellt 310, um die Ergebnisse zu verbessern und ggf. die Abfragen auch schneller zu bearbeiten.

Die Ausgabe "Service-Antwort" 124 ist das Ergebnis der Anfrage an den Backend-Dienst 200. Es hängt davon ab, ob Nachrichten angefordert oder gesendet werden oder Kontexte an den Back-End-Dienst gesendet werden.

Der Backend-Dienst entscheidet, ob die Daten ausreichend sind, oder mehr Kontext benötigt wird. Entsprechend kann die "Service-Antwort" unterschiedlich formuliert sein. Z.B. "ich benötige mehr Daten" oder "Die Lösung des Problems ist xyz".

Die Chat-Komponente 120 ist in der Figur dargestellt, wie sie auf einer Benutzeroberfläche in der Applikation verwendet werden könnte. Dafür gibt es unten auch ein Benutzerfrage / Nachrichteneingabefeld 125, mit der Möglichkeit der Eingabe für frei gestellte Fragen des Benutzers zu den Daten.

Dafür benötigt die Chat-Komponente 120 eine Chat-Komponentenschnittstelle 126, also eine Schnittstelle zur Interaktion mit der gehosteten Umgebung, z.B. zum Empfangen der Daten aus dem Diagramm und zum Anzeigen des Ergebnisses für eine Bedienperson.

Der Backend Service 200 bezeichnet die Serverseite der Anwendung, das erfindungsgemäße System, auf der die Daten gesammelt und verarbeitet werden.

In dem erfindungsgemäßen System befindet sich ein Modul für Kl, künstliche Intelligenz: 210. Dabei handelt es sich um ein Backend-Modul, das aus verschiedenen ML/KI-basierten Bibliotheken und Modellen besteht, die zur Definition und Analyse von Fragen/Nachrichten des Benutzers verwendet werden. Dies wird auch vom: Reasoning Modul (240) (Reasoning Engine (241)) und dem Modul: "Document and Information Retrieval Engine" (220) zur Dokumenten- und Informationsbeschaffung verwendet.

Das Reasoning Modul entscheidet, von welchen angeschlossenen Systemen es Daten anfordert, welche Tools es für Analysen verwendet und welche Antworten es als relevant bewertet.

Verschiedene Kl- und ML-Modelle 210/211 werden verwendet, um die Vorverarbeitung der Daten durchzuführen, die Anfragen zu beantworten und die Handlungsempfehlungen für eine weitere Steuerung der Anlage zu erzeugen.

Die Dokument und Information Retrieval Engine 220: besteht aus verschiedenen Bibliotheken/Modulen, die je nach Benutzerfragen zum Abrufen von Dokumenten und/oder Informationen verwendet werden. Verschiedene Datenquellen 221 werden im Folgenden beispielhaft definiert.

Diese Datenquellen könnten z.B. sein:
- Alte Maschinendaten für die Anlage 10 oder einzelne Assets 11, 12 oder auch Assetgruppen (wie z. B. Asset und zugehörige Sensoren zur Überwachung des Asset).
- Handbücher vom jeweiligen Hersteller des Asset, mit dem Leistungskatalog zu den Assets
- Bekannte Muster, welche beispielsweise vorher in der Anlage wiederholt aufgezeichnet wurden, oder welche bei der Programmierung der Anlage als bekannt festgelegt wurden.
- System-Alarme, welche nicht von den Assets oder Sensoren, sondern von der Steuerungs-Anlage erzeugt werden, wie z.B. eine zu wechselnde Pufferbatterie oder ein Schreibfehler im Arbeitsspeicher

- Suchmaschinen z.B. zur Ergänzung von Echtzeitdaten, die aktuell nicht im LLM hinterlegt sind wie Wetter-Daten, ein neues FW-Update, ...

Die Analyse-Engine 230 enthält eine erweiterbare Liste von Werkzeugen 231, die beispielsweise mit numerischen Mustern umgehen können. Sie stellt dem Hauptmodul 240 diese Werkzeuge zur Verfügung. Damit werden hier eingegebene Daten ausgewertet.

Die Analysewerkzeuge 231 umfassen Werkzeuge zur Analyse und Behandlung der gegebenen Daten über ein bestimmtes bekanntes Muster oder ein vordefiniertes Muster gemäß der von der Maschine erfassten Datenhistorie. Das Tool kann spezifische Lösungen oder Vorschläge in einem bestimmten Format bereitstellen, die von der Haupt-Engine verarbeitet werden können.

z. B. eine. Korrelationsmatrizen Berechnung, KPI Berechnung, Trend-Analyse, ..., also alles was auf numerischen Berechnungen basiert.

Das Reasoning-Modul 240 verwendet die vorverarbeiteten Eingabedaten beispielsweise unter Berücksichtigung alter Empfehlungen und wählt das passende Analyse Werkzeug aus.

Im Falle einer textbasierten Eingabe wird der Text z. B. vorformatiert und an die Document - Retrieval Engine 220 weitergeleitet. Diese Informationen werden mit Informationen aus dem Sprachmodell angereichert 211. Das Endergebnis wird an den Benutzer weitergeleitet.

Die Reasoning Engine, 241, überprüft die Art der Daten und gibt ggf. an die Analyze Engine weiter. Alarme, andere Texte werden an die Document Retrieval Engine weitergegeben.

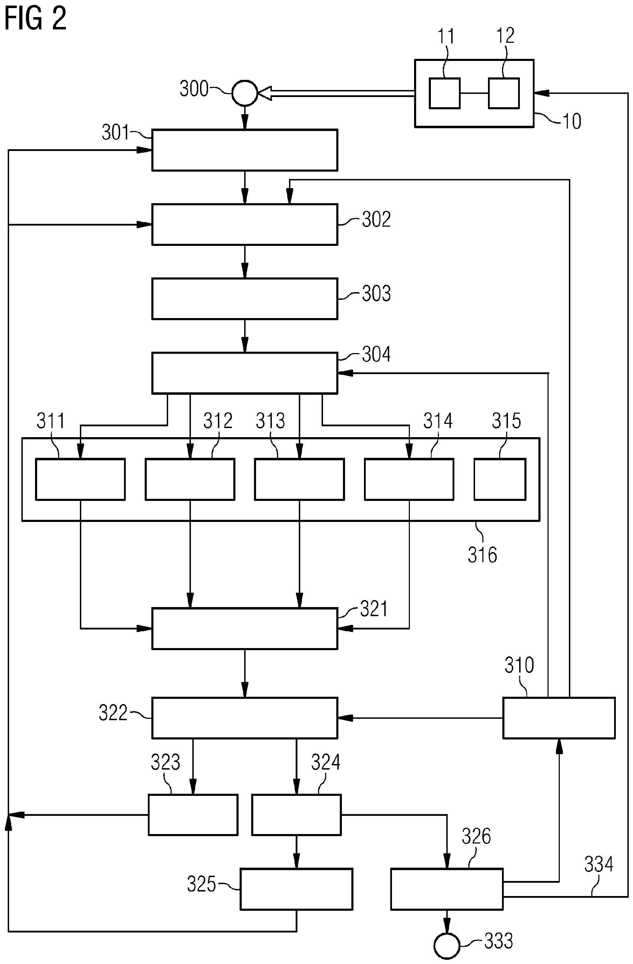

Figur 2 zeigt einen beispielhaften Ablauf wie mittels des Verfahrens eine verbesserte Erkennung von Fehlern oder Unregelmäßigkeiten in einer Anlage durchgeführt werden kann.

Es ist bekannt, dass in einer industriellen Anlage eine regelmäßige Überwachung der Prozesse und Produkte erfolgt, beispielsweise über Sensoren, Qualitätssicherung beim Produktionsergebnis, aber auch über die Überwachung der Steuerung selbst. Hierbei kann es zu vielfältigen Problemen kommen, welche sich beispielsweise in Form von ungewöhnlichen Kennwertlinien in einem Diagramm (aus Messwerten eines Sensors) oder auch in Form von Alarmen, auch in Textform, zeigen kann. Nur ein auf der Anlage geschulter Mitarbeiter kann üblicherweise aus diesen Anzeigen erkennen, ob ein Problem vorliegt, um welches Problem es sich handelt, wie gravierend das ist (also wie groß der Handlungsbedarf ist) und wie man das Problem lösen kann.

Dies ist aber für einen reibungslosen Betrieb in der Anlage essenziell, da nicht nur die Produktion selber zu Ausschuss werden kann, sondern auch Schäden an der Anlage entstehen können, die zu Stillstand und weiterem ungeplantem Produktionsausfall führen.

Beschrieben wird die Erfindung anhand einer Flaschenabfüllanlage, dieses Beispiel soll aber nicht einschränkend verstanden werden. Andere Verpackungs-, Herstell- und Produktionsverfahren sind ebenfalls darunter zu verstehen.

Nach Produktionsbeginn 300 werden viele Signale und Werte der Anlage überwacht. Das Produktionsergebnis ist in diesem Fall, eine genau abgemessene Menge Flüssigkeit in eine Flasche zu füllen und diese korrekt zu verschließen (bspw. mittels Schraubverschlusses).

Für das Ausführungsbeispiel wird unter anderem das Drehmoment-Signal des Deckel-Schraubers überwacht und weitere Systemmeldungen ausgelesen.

Wenn nun beispielsweise festgestellt wird, dass die Flaschen nicht mehr korrekt verschlossen sind, wird eine Fehlersuche gestartet: 301, durch Auswahl der Art von auszuwertenden Signalen und dem Zeitraum der Auswertung.

In einem ersten Schritt werden nun mögliche Fragestellungen generiert, welche auf den festgestellten Fall passen, z.B. weil sie so zu einem früheren Vorfall passen würden.

"Was ist der Grund für die festgestellten Vorfälle mit den Deckeln?"

In einem zweiten Schritt 303 werden von einem KI Modell 210, 211 die vorliegenden Informationen mit der zuvor generierten Fragestellung kombiniert, 303, welche dann wiederum auf die vorliegenden Daten angewendet werden soll.

In einem dritten Schritt wird ein Zwischenergebnis erzeugt, wobei aus den bisher bereits erkannten Informationen auch entschieden wird 304, ob weitere Verarbeitungen von Daten erforderlich sind und wenn ja mit welchen Werkzeugen 316.

In dem Beispiel-Fall stehen einige Werkzeuge zur Verfügung, beispielsweise kann eine Anomalie-Detektion 311 durchgeführt werden, bei der beispielsweise die Maximalwerte bestimmter Messungen bewertet werden.

Eine weitere Alternative für eine Vorverarbeitung wäre beispielsweise eine Auswertung von Vibrationsdaten der Bearbeitungsmaschine oder der Transportvorrichtung, 312, welche in dem beschriebenen Beispiel allerdings kein Ergebnis zeigt.

Weiterhin ist es möglich, mittels KI die Dokumentationen oder Handbücher 313 heranzuziehen und dort nach allgemeinen Beschreibungen und Erklärungen für die Fehlersuche zu suchen. Darüber hinaus kann neben der allgemeinen Information im Wartungshandbuch auch die individuelle Vorgeschichte der Anlage oder der betroffenen Assets zur weiteren Analyse herangezogen werden, wurde dieser Fehler schon mal festgestellt, gab es beispielsweise eine Fehlfunktion beim Verschließen oder hatten die gelieferten Deckel nicht richtige Qualität oder Größe. Lief das Förderband damals nicht in der richtigen Geschwindigkeit? Bei einem auftretenden Fehler sind viele Gründe denkbar, die teilweise auch nicht gleich naheliegend sind. Welche Einstellungen wurden in der letzten Zeit vorgenommen, sind die Wartungsintervalle eingehalten worden...

Das so erhaltene verbesserte Zwischenergebnis wird mit dem ursprünglichen Prompt kombiniert, um eine erneute Antwort zu stimulieren.

In einem nächsten Schritt kann festgestellt werden, dass für eine Lösung des Problems zunächst weiterer Input erforderlich ist: 323. Dann wird in dem gewählten Beispiel etwa eine zusätzliche Untersuchung angefordert, bei der beispielsweise die Geräuschentwicklung angefragt wurde. Diese Information ist ursprünglich nicht berücksichtigt worden, hier ging es um die Vibrationen in dem Gerät - wobei natürlich eine Abhängigkeit zwischen einer Vibration und einer Geräuschentwicklung vorhanden sein kann.

In diesem Fall wird die Schleife nochmal durchlaufen, 302, dies kann iterativ mehrfach geschehen, bis die Antwort eine ausreichende Güte aufweist, so dass ein Fehler identifiziert und behoben werden kann.

Im anderen Fall wird nun eine Fehleranalyse erzeugt, welche beispielsweise mehrere mögliche Fehlerquellen identifiziert, basierend auf dem beobachteten Verhalten und der in Betracht gezogenen Daten.

### Bezugszeichenliste

- 10: Industrielle Anlage
- 11: Sensor
- 12: Asset
- 13: ausgewählter Wertebereich
- 100: Anwendung
- 110: Anzeige, z. B. Alarm
- 111: Andere Daten-Quellen
- 120: Chat Komponente
- 121: Ausgabe 1 (ermittelter Kontext)
- 122: Ausgabe 2 (vorgeschlagene Frage)
- 123: Eingabe
- 124: Antwort
- 125: Eingabe-Feld
- 126: Chat Komponente - Schnittstelle
- 200: Backend Dienst
- 210: LLM
- 220: Modul: Dokumenten- und Informationsbeschaffung Engine
- 221: Datenquellen, z. B. Handbuch der Anlage
- 230: Analyse Engine Modul
- 231: Analyse-Tools
- 240: Reasoning Modul
- 241: ReasoningEngine -
- 300: Start
- 301: Datenselektion Ereignis
- 302.323: Promptselektion
- 303: Promptverarbeitung durch LLM
- 304: Zwischenergebnis
- 310: Datenspeicherung für Verbesserung der Ausgabe / Training der LLM
- 311: Werkzeug zur Anomalie-Erkennung
- 312: Vibrations-Messgerät
- 313: Bedienhandbücher, Dokumentation
- 314: Wartungshistorie
- 316: Analysewerkzeuge
- 322: Verbesserter Prompt
- 324: Informationsausgabe
- 325: verbesserte Eingabe
- 326, 333: Anzeige (z. B. Alarm) aufgeklärt

## Patentansprüche

1. Computerimplementiertes Verfahren zum Erkennen von Unregelmäßigkeiten in einer industriellen Anlage (10), bestehend aus Assets (11, 12), welche zueinander in Wirkbeziehungen stehen,
mit Hilfe einer Kl (200), mit den folgenden Schritten
a) Überwachung der Assets (12) durch regelmäßiges Überwachen von kennzeichnenden Werten (110), und
b) Übernahme einer Menge von Werten (13), aus einem Zeitbereich (t),
c) Analyse der Menge von Werten (13, 301), und Erzeugen von möglichen ersten Prompts (122, 302) zur Abfrage der KI (200), abhängig von einem ermittelten Analyseergebnis (121),
d) Verwenden des Analyseergebnisses um, abhängig von den erzeugten Prompts, eine Weiterverarbeitung der vorhandenen Informationen oder Abfrage weiterer Informationen durchzuführen,
e) Kombination zumindest eines erzeugten ersten Prompts mit dem Ergebnis der Vorverarbeitung oder dem Ergebnis der Abfrage, zu verbesserten zweiten Prompts,
f) Abfrage der KI mit den erzeugten zweiten Prompts, und Empfang einer Antwort
g) Evaluierung der Antwort zur Bewertung der erkannten Unregelmäßigkeit und
h) Erzeugen einer Handlungsempfehlung für die industrielle Anlage (10) zur Behebung der erkannten Unregelmäßigkeit (324) und Übermitteln dieser Handlungsempfehlung an die Anlage (334).

2. Verfahren gemäß Patentanspruch 1, **dadurch gekennzeichnet, dass** es sich bei den Kennzeichnenden Werten (110, t) um Messwerte handelt, die insbesondere durch Sensoren (11) in der Anlage (10) ermittelt werden.

3. Verfahren gemäß Patentanspruch 1 oder 2, **dadurch gekennzeichnet, dass** es sich bei den Kennzeichnenden Werten (110) um Alarme handelt, welche insbesondere durch eine Softwareüberwachung der Anlage (10) erzeugt werden.

4. Verfahren gemäß einem der vorherigen Patentansprüche, **dadurch gekennzeichnet, dass**
die Weiterverarbeitung der vorhandenen Informationen (304) mittels weiterer Werkzeuge zur Datenverarbeitung oder zur Datenermittlung in der Anlage (304, 311, 312, 313, 314, 316) erfolgt.

5. Verfahren gemäß einem der vorherigen Patentansprüche, **dadurch gekennzeichnet, dass**
die Weiterverarbeitung der vorhandenen Informationen eine Ergänzung mit weiteren Dokumenten umfasst, insbesondere
- Dokumentation über die Anlage oder Handbücher oder
- eine Aufzeichnung einer Wartungshistorie des betroffenen Assets oder
- zuvor erzeugte Handlungsempfehlungen, welche positiv bewertet wurden.

6. Verfahren gemäß einem der vorherigen Patentansprüche 4 oder 5, **dadurch gekennzeichnet, dass**
Die Kombination der erzeugten ersten Prompts mit dem Ergebnis der Vorverarbeitung oder dem Ergebnis der Abfrage, zu verbesserten zweiten Prompts, durch ein LLM erzeugt wird.

7. Verfahren gemäß einem der vorherigen Patentansprüche, **dadurch gekennzeichnet, dass**
die erzeugte Handlungsempfehlung für die industrielle Anlage (10) zur Behebung der erkannten Unregelmäßigkeit (324) gespeichert und für weitere Abfragen verwendet wird, insbesondere zum Training der Kl oder des LLM.

8. Verfahren gemäß einem der vorherigen Patentansprüche, **dadurch gekennzeichnet, dass**
die Schritte des Verfahrens so oft wiederholt werden, bis die Unregelmäßigkeit in der industriellen Anlage geklärt und / oder behoben ist.

9. Verfahren gemäß einem der vorherigen Patentansprüche, **dadurch gekennzeichnet, dass**
die Auswertung und Verarbeitung der Daten in einer Vorrichtung (200) in einer Cloud erfolgt.

10. Computerprogrammprodukt, geeignet zur Ausführung der Schritte des Verfahrens gemäß deinem der Patentansprüche 1 bis 8.

11. System (200), geeignet und eingerichtet zum Erkennen von Unregelmäßigkeiten
- in einer industriellen Anlage (10), bestehend aus Assets (11, 12), welche zueinander in Wirkbeziehungen stehen, und welche durch regelmäßiges Ermitteln von kennzeichnenden Werten (110) überwacht werden, insbesondere durch Übernahme einer Menge von Werten (13), aus einem Zeitbereich (t),
- mit einer Analyse Engine (230) geeignet und eingerichtet zur Analyse der Menge von Werten (13, 301), und Erzeugen von möglichen ersten Prompts (122, 302) zur Abfrage, abhängig von einem ermittelten Analyseergebnis (121),
sowie geeignet und eingerichtet eine Kombination zumindest eines erzeugten ersten Prompts mit dem Ergebnis der Vorverarbeitung oder dem Ergebnis der Abfrage, zu verbesserten zweiten Prompts,
- mit einer Dokumenten- und Informationsbeschaffung Engine (220) welche geeignet und eingerichtet ist, unter Verwenden des Analyseergebnisses um, abhängig von den erzeugten Prompts, eine Weiterverarbeitung der vorhandenen Informationen oder Abfrage weiterer Informationen durchzuführen,
- mit einer Kl (210), geeignet und eingerichtet um mittels Abfrage des ersten Prompts und des erzeugten zweiten Prompts, und Empfang einer Antwort, Evaluierung der Antwort zur Bewertung der erkannten Unregelmäßigkeit und
- Erzeugen einer Handlungsempfehlung für die industrielle Anlage (10) zur Behebung der erkannten Unregelmäßigkeit (324) und Übermitteln dieser Handlungsempfehlung an die Anlage (334).

12. System gemäß Patentanspruch 11, **dadurch gekennzeichnet, dass** es sich bei den Kennzeichnenden Werten (110, t) um Messwerte handelt, die insbesondere durch Sensoren (11) in der Anlage (10) ermittelt werden.

13. System gemäß Patentanspruch 11 oder 12, **dadurch gekennzeichnet, dass** es sich bei den Kennzeichnenden Werten (110) um Alarme handelt, welche insbesondere durch eine Softwareüberwachung der Anlage (10) erzeugt werden.

14. System gemäß einem der vorherigen Patentansprüche, **dadurch gekennzeichnet, dass** weitere Werkzeuge zur Datenverarbeitung oder zur Datenermittlung in der Anlage (304, 311, 312, 313, 314, 316) vorhanden sind, geeignet und eingerichtet um die Weiterverarbeitung der vorhandenen Informationen (304) durchzuführen.

15. System gemäß einem der vorherigen Patentansprüche, **dadurch gekennzeichnet, dass** die Weiterverarbeitung der vorhandenen Informationen eine Ergänzung mit weiteren Dokumenten umfasst, insbesondere Dokumentation über die Anlage oder Handbücher oder eine Aufzeichnung einer Wartungshistorie des betroffenen Assets (11, 12).

16. System gemäß einem der vorherigen Patentansprüche 14 oder 15, **dadurch gekennzeichnet, dass**
Kombination der erzeugten ersten Prompts mit dem Ergebnis der Vorverarbeitung oder dem Ergebnis der Abfrage, zu verbesserten zweiten Prompts, durch ein LLM (211) erzeugt wird.

17. System gemäß einem der vorherigen Patentansprüche, **dadurch gekennzeichnet, dass** die Dokumenten- und Informationsbeschaffungs-Engine (220) geeignet und eingerichtet ist, die erzeugte Handlungsempfehlung für die industrielle Anlage (10) zur Behebung der erkannten Unregelmäßigkeit (324) als Wartungshistorie zu speichern und für weitere Abfragen zu verwenden, insbesondere auch zum Training der KI (210) oder des LLM (211).
